# EUROPEAN PATENT APPLICATION

(11) **EP 2 537 603 A1**
(43) Date of publication of application: **26.12.2012**
(21) Application number: 11742336.8
(22) Date of filing: 14.02.2011
(51) Int. Cl.: B21D 53/00, B32B 15/04

(54) **METHOD FOR MANUFACTURING COMPONENT, AND COMPONENT**

(30) Priority: 15.02.2010 JP 2010030211
(71) Applicant: Tanaka Manufacturing Co. Ltd., Tottori 689-0216 (JP)
(72) Inventor: TANAKA, Seiji, Tottori-shi Tottori 689-0202 (JP); TANAKA, Michio, Tottori-shi Tottori 689-0202 (JP)
(74) Representative: TBK
(86) International application number: PCT/JP2011/052977
(87) International publication number: WO 2011/099593

(57) **Abstract**

To provide a manufacturing method by which a component having uniquely shaped local portions can be realized without causing an increase of man-hour.

A method for manufacturing a component J is provided in such a manner that a metallic plate-like member 1a created by single-piece press working is superimposed to other plate-like members 1b and 1c processed separately into different shapes and these plural plate-like members 1a, 1b and 1c are joined according to bonding press working so as to obtain a component having uniquely shaped local portions p1 formed by at least one of the plate-like members.

## Description

### [Field of the Invention]

The present invention relates to components such as housing of electronic apparatus and a manufacturing method thereof.

### [Background Art]

So-called press working has been known to obtain a desired molded product by causing clamping pressure to act on a sheet metal material using a pairing metal mold. In general, press working causes plastic deformation of a sheet metal material into various kinds of shapes while sustaining a substantially constant sheet thickness and entails a certain limit to change the material thickness. Therefore components are created by press working with a constantly definite relationship between a front shape and a rear shape and molding a front side and a rear side into different shapes is difficult. For example, if a uniquely shaped local portion is formed at the front, a rugged shape corresponding to the front shape is inevitably formed at the back, so that it is difficult to create a component with no correlation between a front shape and a rear shape only by press working. There is also a certain limit to allow different thicknesses and strength characteristics between a certain area and other areas. Thus, it should be stated that products created only by conventional press working imply low designability.

As a result, in the case of manufacturing a component with one surface provided with a uniquely shaped local portion and the other surface provided with another uniquely shaped local portion and/or a plane or the like, in addition to press working, working other than the press working needs to be performed separately such as posterior working for a boss and/or a dowel.

In these circumstances, for manufacturing a component which is required to satisfy relatively high dimensional accuracy and has a uniquely shaped local, there is a method in which a material corresponding to a thickest site is subjected to machining so as to obtain a component provided with a portion of an intended shape. For example, an upper surface board for keyboard formation, which is one of housing components of notebook computers, needs to have a design surface formed at the front and a multiple number of uniquely shaped local portions such as a boss for substrate installation at the back. Therefore, in order to realize such a complicated shape, an upper surface board is actually manufactured by aluminum machining (e.g. refer to non-patent document 1).

It is absolutely essential that such housing components are provided with not only the aforementioned boss for installation and a dowel for use in positioning or the like but also various kinds of uniquely shaped local portions in relation to correspond to requirements of strength characteristics and weight reduction or other necessities. Therefore, an extremely enormous amount of man-hour is required for machining by machine tools and it is estimated that, supposing production of 10,000 pieces of the component per diem, 2,500 of expensive machining centers need to be in operation for 20 hours.

Various kinds of components for use in electronic apparatuses or other devices are always required to accommodate form versatility and material selection versatility or the like for the necessity of securing improved functionality and designability or other improvements. In these circumstances a technique is expected to efficiently manufacture, with less man-hour, components which are required to satisfy relatively high accuracy and appropriately provided with uniquely shaped local portions.

Such requirement is not limited to the field of electronic apparatuses but has been expanding to the entire fields of manufactured products.

### [Citation List]

### [Patent Document]

Non-patent document 1: "Apple Japan Inc.", [online], [searched on September 9, 2009], Internet <http://www.apple.com/jp/macbookair/>

### [Summary of the Invention]

### [Technical problem]

The present invention was achieved by focusing on the above circumstances and an object thereof is to solve problems such as reduction of designability by many restrictions in shape when a product with a uniquely shaped local portion is manufactured by press machining, and to manufacture various forms of components without causing a substantial increase of man-hour.

### [Solution to Problems]

More specifically, a component manufacturing method according to the present invention is characterized in that a metallic plate-like metal member created by single-piece press working is superimposed on another plate-like member which is processed separately into a different shape and these plural plate-like members are joined according to bonding press working so as to obtain a component which is formed by at least one of the plate-like members and has uniquely shaped local portions.

In such a structure, a component with uniquely shaped local portions can be obtained by superimposing a metallic plate-like member created by single-piece press working and another plate-like member processed separately into a different shape and joining these plural plate-like members according to bonding press working, wherein uniquely shaped local portions can be formed on one surface without affecting the other surface even if press working is applied in manufacturing, so that designability is improved and various forms of components can be manufactured without causing a substantial increase of man-hour.

The term "bonding press working" here was named to refer to a general work of compressing a plurality of superimposed plate-like members in a thickness direction for bonding. It is represented by work to evoke an adhesive function of an adhesive layer interposed between plate-like members by a compressive force obtained by pressing. The term "single-piece press working" also refers to an action of creating each of plate-like members of predetermined shapes by applying press working to a sheet metal material and, for convenience of explanation, was named to be clearly distinguished from the above "bonding press working".

As a preferable embodiment of the bonding press working, it is suggested to join the above plural plate-like members to each other by a pressing machine provided with a stroke control function. In other words, a pressing machine provided with a stroke control function is used to realize a desirable embodiment of bonding press working in which a compressive force is made to act uniformly on an adhesive layer interposed between plate-like members so as to evoke an adhesive function in each area with no unevenness.

In order to further ensure the degree of joining between the above plate-like members, the bonding press working is to evoke at least an adhesive function of an adhesive layer interposed between plate-like members and reinforced bonding work should be applied in addition to the bonding press working.

Here, as a concrete example of the above reinforced bonding work, laser welding work is suggested to join adjacent metallic plate-like members to each other by irradiating a laser beam to a boundary therebetween. Other examples of the reinforced bonding work include spot welding work to join metallic plate-like members, which are unexposed externally, to each other by spot welding and fastening work to join externally unexposed plate-like members to each other by using rivets.

The uniquely shaped local portions include as a portion for installation and more concrete examples thereof include a boss with a screw hole, a hook for engaging with various kinds of members and a hole formed to allow another member to pass therethrough.

For the uniquely shaped local portions, a portion for positioning can be suggested and more concrete examples thereof include a dowel formed into a protruded shape.

For the uniquely shaped local portions, a portion for changing the strength can be suggested and more concrete examples thereof include a rib formed into a reinforcement shape, a thick part area formed to be thicker than any other portions, and a thin part area formed to be thinner than any other portions.

For the uniquely shaped local portions, a portion for changing the mass distribution can be suggested and more concrete examples thereof include a hole and a cavity for contributing to weight reduction, a thick part formed to thicker than any other portions for weight increase, and a thin part formed to be thinner than any other portions for weight reduction.

For the uniquely shaped local portions, a portion for adding special functions can be suggested and more concrete examples thereof include an operation part for operating electronic apparatuses or other devices.

For the uniquely shaped local portions, a design formation part for appearance adjustment can be suggested and more concrete examples thereof include a rugged part formed to change the appearance.

In order to increase a degree of press working and further contribute to suppression of man-hour, it is desirable that the above plate-like members are entirely made of metal by single-piece press working respectively. Note that the metallic plate-like members include not only metallic plates made of simple-substance materials such as steel plate, aluminum plate, stainless steel plate, titanium plate, duralumin plate and magnesium plate, but also metallic plates serving as a main constituent and having various kinds of coating layers on entire areas of a front surface and a back surface thereof.

If at least one of the above plate-like members is non-metallic, a component can be obtained by efficiently using characteristics of the non-metallic plate-like member.

For application to various kinds of specifications, it is preferable to apply at least one of the plural plate-like members including an element to change strength characteristics, an element to change the mass distribution, an element having a shielding function to shield heat, electricity, electromagnetic wave, sound and light or the like, an element having a vibration damping function, an element to form a design surface for appearance adjustment, and other elements.

Here, "strength characteristics" refer to general characteristics regarding the strength and concrete examples thereof include rigidity, softness, flexibility, toughness, elasticity, kink resistance and/or pressure resistance.

"Element" includes elements related to form, quality of material, color, electrical characteristics, heat resistance, plastic deforming workability, corrosion and aging change characteristics, and combinations of them. Note that the form includes shape, pattern and structure or the like.

In order to smoothly perform bonding press working, as the plate-like member, a member with an adhesive layer which is preformed at least on one surface thereof is preferably used.

In order to further enhance component accuracy and reduce work-hours of post-processing work, it is preferable to further provide finishing press working in order to cut off unnecessary portion after completion of the bonding press working.

Concrete examples of the unnecessary portion include an area which swells out of an portion to constitute the edge of a finished product and a positioning area for positioning plate-like members to each other.

As an example of the components obtained by the present invention, there is a component which partially constitutes a housing of an electronic apparatus as represented by notebook computers or other devices.

The components according to the present invention are also characterized in that a plurality of plate-like members, each of which is created by single-piece press working and formed into a different shape, is superimposed and joined via an adhesive layer and uniquely shaped local portions formed by at least one of the plate-like members are included, the adhesive layer being present continuously with a substantially constant thickness over entire areas of joining surfaces of the plate-like members.

Such components are created by applying single-press working to each of plate-like members and can be therefore manufactured with less work-hour even though uniquely-shaped local portions are included. In addition, owing to the presence of the adhesive layer with a constant thickness continuously over entire areas of joining surfaces of the plate-like members, the plurality of the superimposed plate-like members is firmly joined without being separated.

As a preferable embodiment of such components, there is a component provided with a plurality of areas each of which involves a mutually different number of the plate-like members being superimposed. In such a structure, each of the areas can be easily set to different characteristics. Here, as a concrete form of the areas, at least two of the areas having different thicknesses to each other can be suggested.

As long as the plurality of the plate-like members is composed of a front plate-like members which is exposed externally, an intermediate plate-like member which is spliced to the back side of the front plate-like member, and a rear plate-like member which is spliced to the back side of the intermediate plate-like member and as long as the uniquely shaped local portions are formed by the intermediate plate-like member, it is possible to obtain a predetermined component without impairing designability and functionality.

Note that an example of the uniquely shaped local portions can be suggested by a boss for installation with a screw hole.

### [Advantageous Effect of the Invention]

As explained above, according to the present invention, it is possible to manufacture various forms of components with uniquely shaped local portions while allowing enhancement of designability without causing a substantial increase of man-hours.

### [Brief Description of the Drawings]

Fig.1 is a perspective view showing a component according to a first embodiment of the present invention.
Fig. 2 is a cross sectional view of A-A line schematically showing the component of Fig.1 with an omitted part.
Fig.3 is an exploded perspective view of the first embodiment.
Fig.4 is a cross sectional view showing a process of manufacturing the component according to the first embodiment.
Fig.5 is a cross sectional view showing a process of manufacturing the component according to the first embodiment.
Fig.6 is a partially enlarged perspective view showing a partially severed portion of V shown in Fig.1.
Fig.7 is a cross sectional view showing a process of manufacturing a boss according to the first embodiment.
Fig.8 is a cross sectional view showing a process of manufacturing the boss according to the first embodiment.
Fig.9 is a cross sectional view showing a process of manufacturing the boss according to the first embodiment.
Fig.10 is a cross sectional view showing a process of manufacturing the boss according to the first embodiment.
Fig.11 is a cross sectional view showing a process of manufacturing the boss according to the first embodiment.
Fig.12 is a partially enlarged cross sectional view of VI shown in Fig.2.
Fig.13 is a perspective view showing a component according to a second embodiment of the present invention.
Fig.14 is an exploded perspective view of the second embodiment.
Fig.15 is a partially enlarged plan view showing the second embodiment.
Fig.16 is a cross sectional view of B-B line shown in Fig.15.
Fig.17 is an exploded perspective view showing a component according to another embodiment.
Fig.18 is an exploded perspective view showing a component according to another embodiment.
Fig.19 is an exploded perspective view showing a component according to another embodiment.
Fig.20 is an exploded perspective view showing a component according to another embodiment.
Fig.21 is an exploded perspective view showing a component according to another embodiment.
Fig.22 is an exploded perspective view showing a component according to another embodiment.
Fig.23 is an exploded perspective view showing a component according to another embodiment.
Fig.24 is an exploded perspective view showing a component according to another embodiment.
Fig.25 is an exploded perspective view showing a component according to another embodiment.

### [Description of Embodiments]

### <First embodiment>

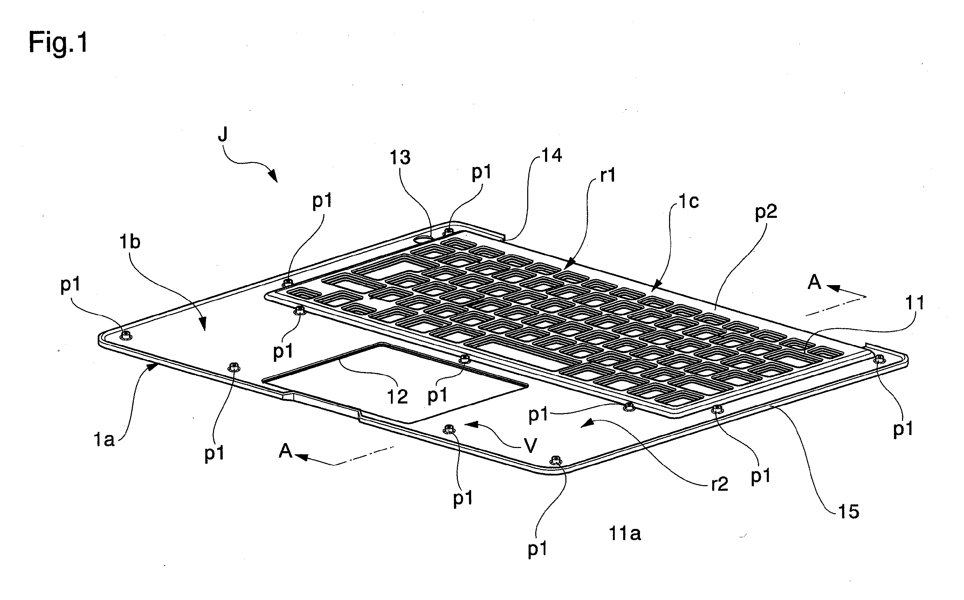

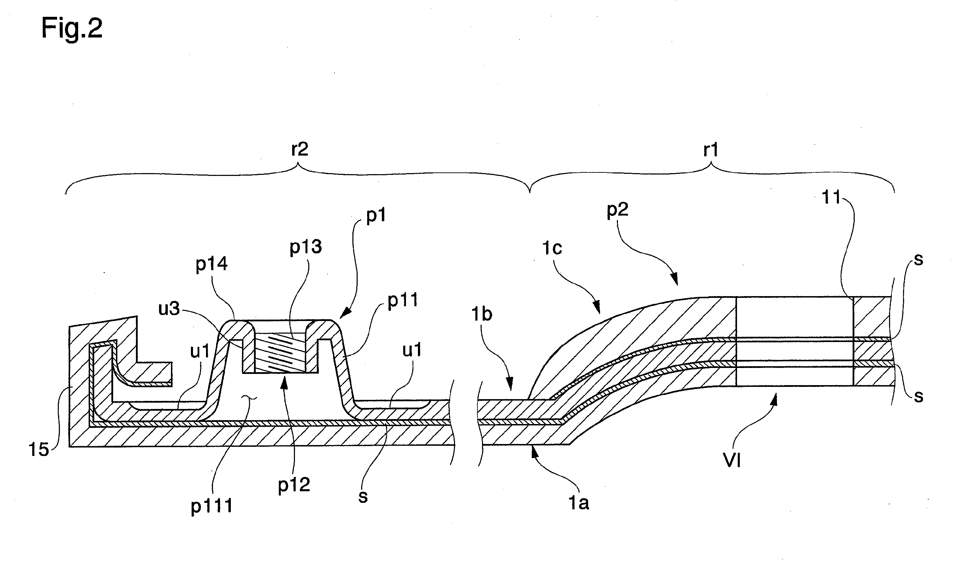

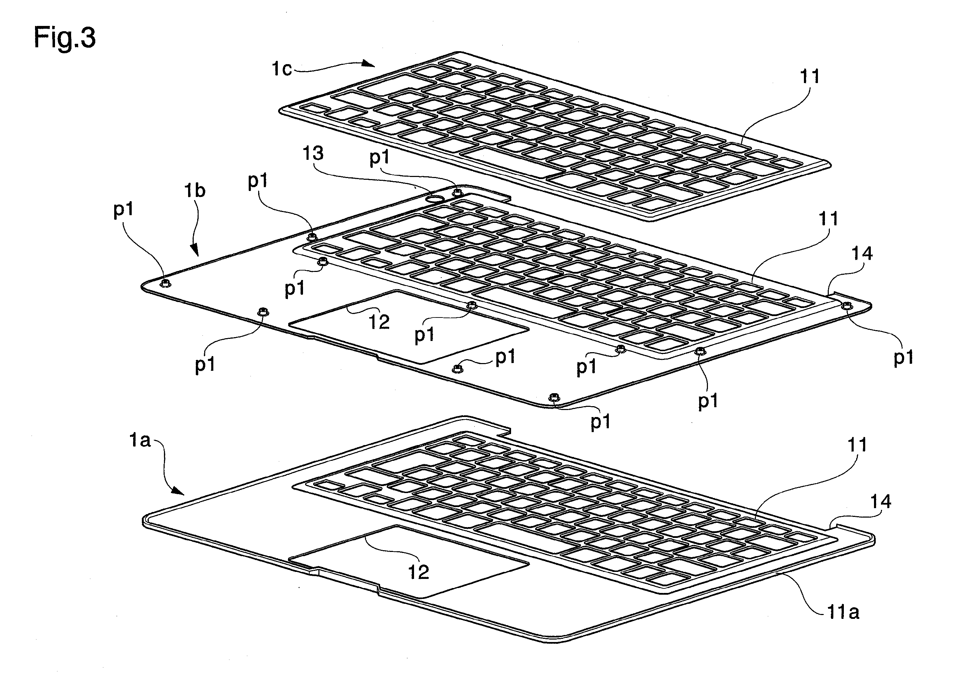

First embodiment according to the present invention will be explained below with reference to Fig.1 to Fig.12.

In the first embodiment, the present invention is applied to an upper surface board J for keyboard formation of notebook computer as a housing component of electronic apparatus and, for convenience of explanation, Fig.1 to Fig.12 show an inner surface side directed upward.

The upper surface board J is provided by superimposing and joining, via adhesive layers s, a plurality of differently shaped plate-like members each of which is created by single-piece press working, or more specifically a front plate-like member 1a which is exposed externally, an intermediate plate-like member 1b which is spliced to a back side of the front plate-like member 1a, and a rear plate-like member 1c which is spliced to an backsurface side of the intermediate plate-like member 1c. Each of the plate-like members 1a, 1b and 1c is made of metal or more specifically uses iron, aluminum, copper, stainless, titanium and magnesium or other elements.

The upper surface board J has a plurality of bosses p1 which are uniquely shaped local portions and a thick part p2 which is used to constitute an area r1 for keyboard formation. The upper surface board J thus comprises the area r1 for keyboard formation and an area r2 for frame plate formation by which the area r1 is surrounded. Then, the adhesive layers s are present continuously with a substantially constant thickness over entire areas of joining surfaces of the plate-like members 1.

The bosses p1, which are areas for installation and formed by the intermediate plate-like member 1b, protrude to the inner side of the housing in such a state that the intermediate plate-like member 1b is bonded to the front plate-like member 1a. In other words, the upper surface board J, which is a product obtained by integrally forming the bosses p1 with the intermediate plate-like member 1b serving as a part of the plate-like members to constitute the upper surface board J, includes protrusions p11 in which the bosses p1 are made to swell out to one surface side or an back surface side of the upper surface board J by drawing the intermediate plate-like member 1b, and includes cylindrical parts u3 which are made to protrude to the inner side of the protrusions p11 by partially burring tip end walls p14 of the protrusions p11 and contain screw grooves p13 carved in inner circumferences thereof, wherein a protruded dimension s1 of the cylindrical parts u3 is set to be smaller than a swelling dimension s2 of the protrusions p11. That is, the bosses p1 are composed of the protrusions p11 for boss formation as a main constituent which are formed integrally with the intermediate plate-like member 1b when the intermediate plate-like member 1b is produced by single-piece press working, wherein the screw grooves p13 are formed by tapping screw holes p12 in tip end areas of the protrusions p11, followed by bonding the intermediate plate-like member 1b to the front plate-like member 1a. The protrusions p11 internally contain cavities p111 and the cavities p111 are covered by the front plate-like member 1a. In other words, the upper surface board J has hollow portions made by the bosses p1. Thus the upper surface board J for keyboard formation of notebook computer as a product is composed of the plurality of the plate-like members 1a, 1b and 1c in which the bosses p1 are formed integrally with a part of the plate-like members 1a, 1b and 1c, namely the intermediate plate-like member 1b.

The thick part p2 is provided to mainly change the strength and created by superimposing and bonding the intermediate plate-like member 1b and the rear plate-like member 1c to the back surface of the front plate-like member 1a. The rear plate-like member 1c is of a shape corresponding to the area r1 for keyboard formation and the intermediate plate-like member 1b is of a shape combining the area r1 for keyboard formation and the area r2 for frame plate formation. Therefore, the area r1 for keyboard formation is composed of three of the front, intermediate and rear plate-like members 1a, 1b and 1c, whereas the area for frame plate formation is composed of two of the front and intermediate plate-like members 1a and 1b. Consequently, the area r1 for keyboard formation is made larger than the area r2 for frame plate formation in the thickness dimension by a thickness of the rear plate-like member 1c. Accordingly, the upper surface board J contains the plurality of the areas which are different to each other in the number of the plate-like members superimposed and the thickness.

In other words, the rear plate-like member 1c is used to form the plurality of the areas which are different to each other in the number of the superimposed members and the thickness in the upper surface board J and includes at least an element to change strength characteristics in the upper surface board J. Note that the front plate-like member 1a constitutes a part of an outer surface of the housing and includes at least an element to form a design surface for appearance adjustment.

The area r1 for keyboard formation includes a multiple number of plural key accommodating holes 11 arranged to accommodate keys not shown. Also formed in the area r2 for frame plate formation are a window 12 for displaying track pad and click button not shown, a hole 13 for switch button exposure, and notches 14 corresponding to hinges, wherein each of the bosses p1 is arranged in this area r2.

Explained next will be a method for manufacturing the upper surface board J.

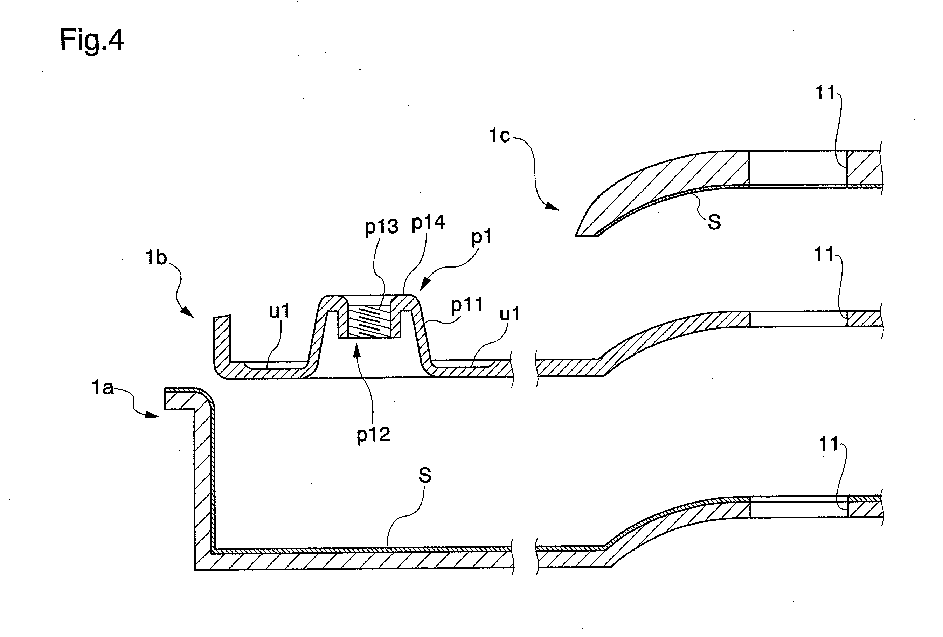

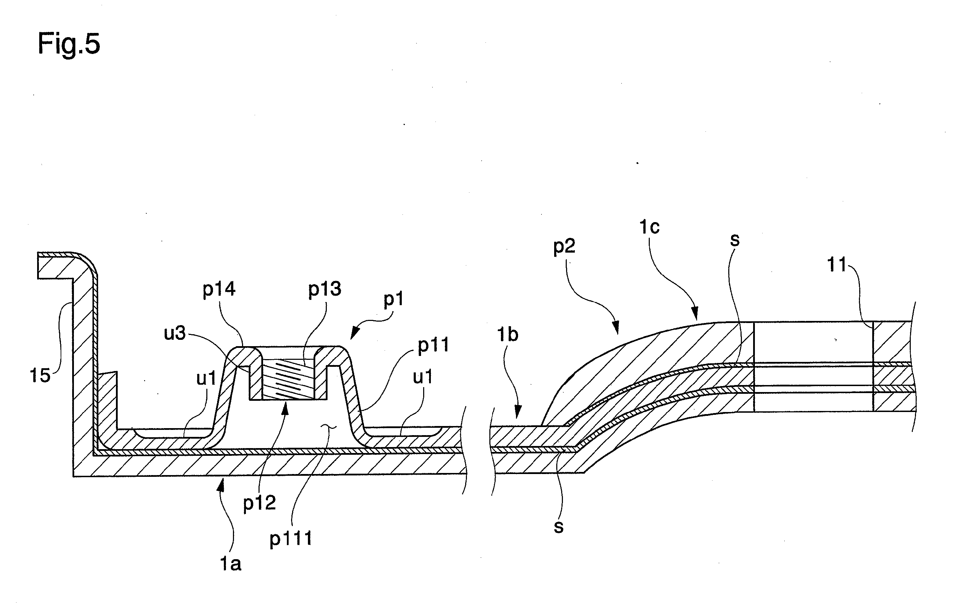

The upper surface board J is, as shown in Fig.4 and Fig.5, created by superimposing the intermediate plate-like member 1b and the rear plate-like member 1c, which are processed separately into different shapes, to the metallic front plate-like member 1a created by single-piece press working and joining these plate-like members 1a, 1b and 1c according to bonding press working by a pressing machine provided with a stroke control function. In the process, the bosses p1 as the aforementioned uniquely shaped local portions and the thick part p2 are formed simultaneously. Here, as stated above, the term "bonding press working" was named to refer to general working of compressing the plurality of the superimposed plate-like members 1a, 1b and 1c in a thickness direction for bonding. The term "single-piece press working" also refers to an act of creating each of plate-like members 1a, 1b and 1c of predetermined shapes by applying press working to a sheet metal material U and, for convenience of explanation, was named to be clearly distinguished from the above "bonding press working".

The above bonding press working evokes at least an adhesive function of the adhesive layers s interposed between the plate-like members 1a, 1b and 1c and, in the present embodiment, is carried out in a manner that the adhesive layers s interposed between the plate-like members are melt by heat while applying a press-welding force thereto.

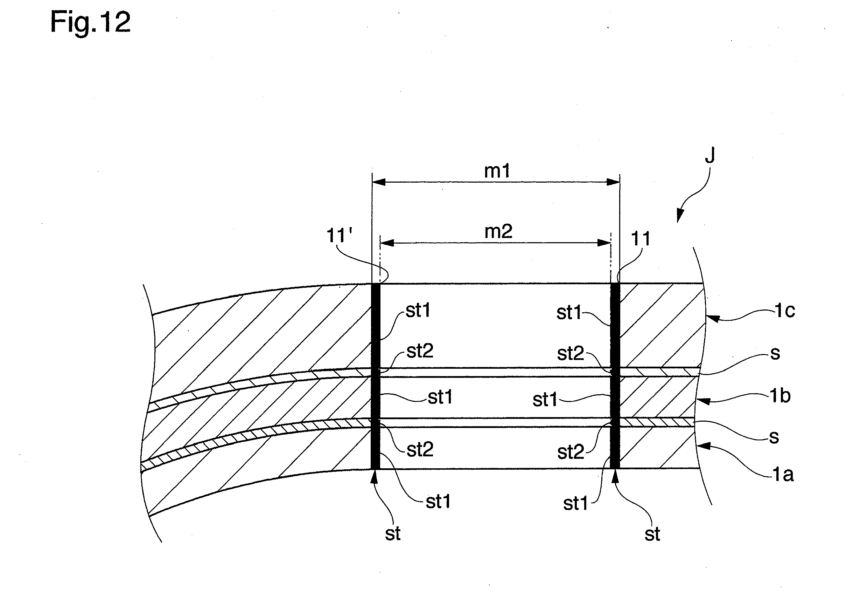

More specifically, single-piece press working is applied to manufacture the front plate-like member 1a having the adhesive layer s on the back surface thereof, the intermediate plate-like member 1b without an adhesive layer, and the rear plate-like member 1c having the adhesive layer s on the front surface. Thereafter, these plate-like members 1a, 1b and 1c are superimposed, followed by applying bonding press working at a temperature which is warm enough to melt the adhesive layers s in order to join the plate-like members 1a, 1b and 1c to each other. Following next is to finish an outline area of the upper surface board J by hemming a peripheral edge 15 of the front plate-like member 1a and carry out paste shaving which is finishing press working applied to the key accommodating holes 11, the window 12 for track pad and click button exposure, the hole 13 for switch button exposure and the notches 14 corresponding to hinges or other portions. The paste shaving is carried out to cut off unnecessary portions st after completion of the bonding press working. The unnecessary portions st swell out of areas to constitute the edge of a finished product and, in this embodiment, for example, refer to the portions st swelling out of inner circumferential edges of the key accommodating holes as shown in Fig. 12. The swelling-out portions st include either metallic portions st1 of the plate-like members or adhesive layer portions st2 or both of them.

In concrete terms, if an inner diameter dimension m2 of a hole 11' which is formed by single-piece pressing and corresponds to the key accommodating hole 11 of each of the plate-like members 1 is set to be slightly smaller than an inner diameter dimension m1 of the key accommodating hole 11 of the upper surface board J as a finished product, not only the adhesive layer portions st2 but also the metallic portions st1 are punched by the paste shaving. At this time, the inner circumference of the key accommodating hole 11 is brought into a mirror finishing state by punching these portions while cooling them on condition that a clearance between an upper die and a lower die in a pressing machine is set to nearly zero, whereby making it possible to mold a worked surface up to a product appearance level. The paste shaving can also be applied to the window 12 and the notches 14 simultaneously.

Single-piece press working regarding the front plate-like member 1a is carried out by using a normal press working technique which involves punching work.

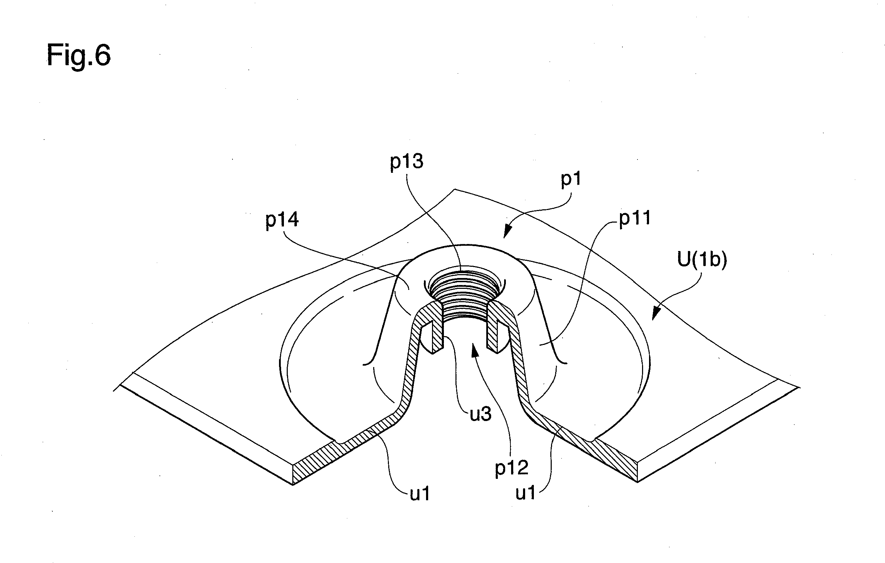

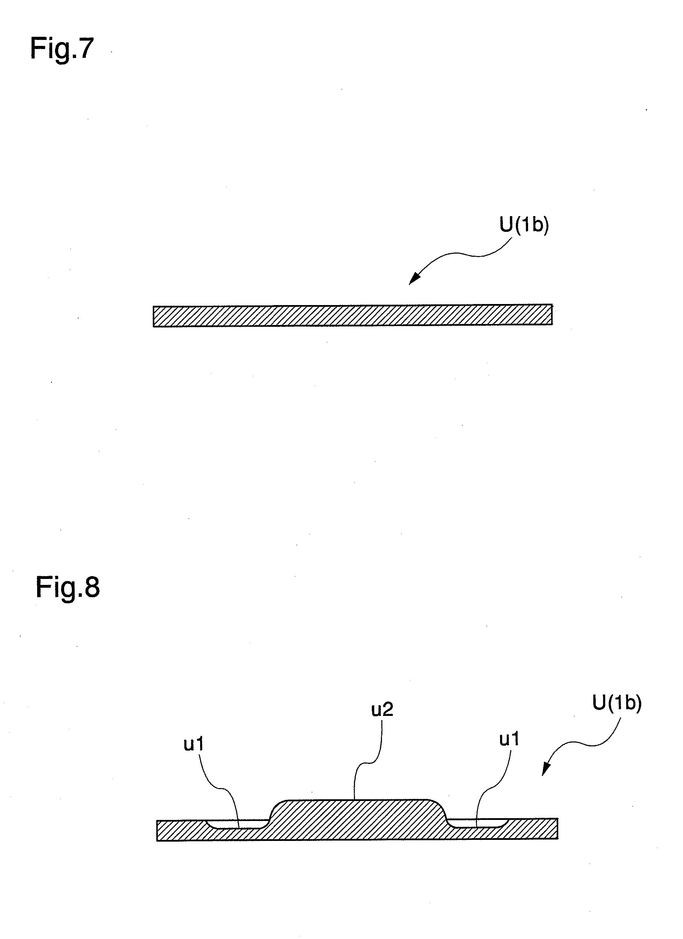

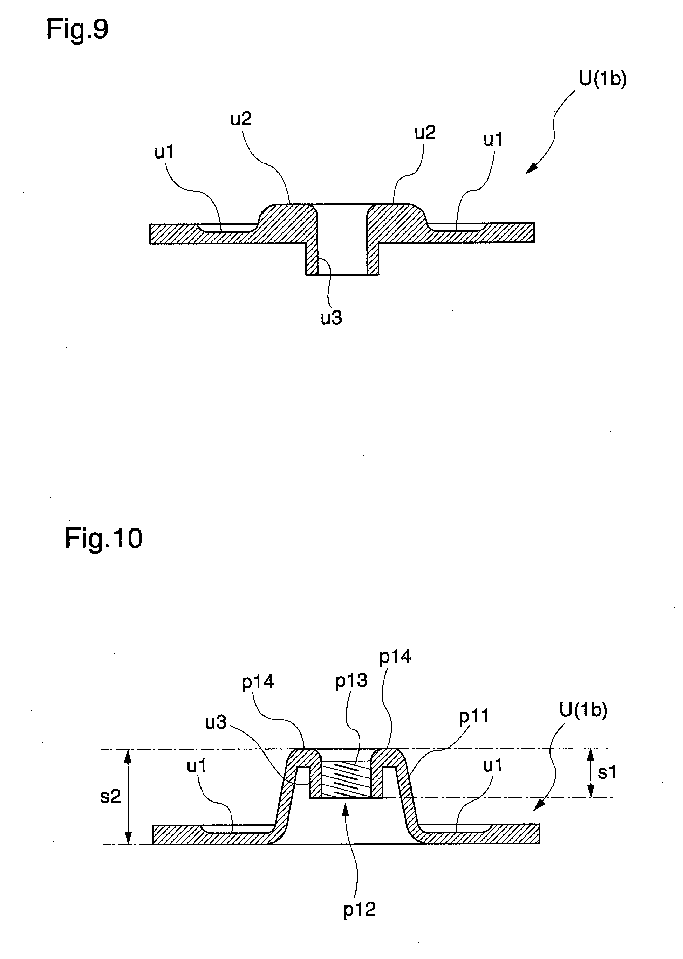

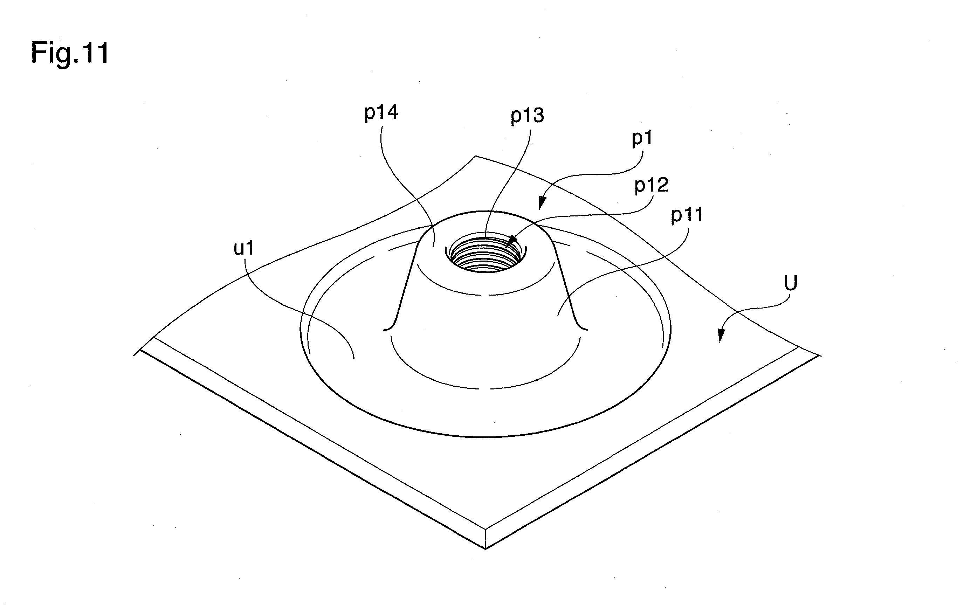

Single-piece press working regarding the intermediate plate-like member 1b is carried out by adding a special press working process for forming the bosses p1 in addition to a normal press working technique which involves a punching work. Fig.6 is an enlarged view of the boss p1 which is partially cut off to show an inner structure thereof. In order to form the boss p1 by press working, a ring-shaped thin part u1 is initially formed, as shown in Fig. 8, by applying crushing work to the sheet metal material U which constitutes the intermediate plate-like member 1b as shown in Fig.7 and a thickened part u2 is formed inside the thin part u1. Thereafter, as shown in Fig.9, the thickened part u2 is subjected to burring work for formation of the cylindrical part u3 and plastic deformation of the thickened part u2 which is present between the cylindrical part u3 and the thin part u1 is used to provide the protrusion p11 having a cup-shape as shown in Fig.10 by drawing work. Then, the screw groove p13 is carved by tapping work in the inner circumference of the cylindrical part u3 to form the screw hole p12. By carrying out the above steps, the boss p1 as shown in Fig.11 can be obtained.

In other words, a product provided with the boss p1 is realized by forming the boss p1 integrally with a part of the intermediate plate-like member 1b, wherein the boss p1 comprises the protrusion p11 in which the intermediate plate-like member 1b is partially made to swell out to one surface side by drawing process, and the cylindrical part u3 created by partially burring the tip end wall p14 of the protrusion p11 to allow protrusion thereof to the inner side of the protrusions p11 and carving the screw groove p13 in the inner circumference thereof, the protruded dimension s1 of the cylindrical part u3 being set to be smaller than the swelling dimension s2 of the protrusion p11.

In such a structure, after applying burring work to form the cylindrical part u3 of a normal length, the outside of the cylindrical part u3 is subjected to drawing work by using the presence of the thickened part u2 so that, without imposing unnatural deformation on the plate-like member 1b, the entire height dimension s2 of the boss p1 can be naturally made larger than the protruded dimension s1 of the cylindrical part u3.

Single-piece press working regarding the rear plate-like member 1c is carried out by using a normal press working technique which involves a punching work.

As stated above, according to the component manufacturing method as shown in the first embodiment, the upper surface board J can be created by superimposing the intermediate plate-like member 1b and the rear plate-like member 1c, which are processed separately into different shapes, to the front plate-like member 1a created by single-piece press working and joining these plate-like members 1a, 1b and 1c according to bonding press working by a pressing machine which is provided with a stroke control function, whereby making it possible to obtain a component with superior strength in the structure of laminating the plurality of the plate-like members 1a, 1b and 1c. Besides, because the plurality of the plate-like members 1a, 1b and 1c is joined via the adhesive layers s placed therebetween, each of the plate-like members 1a, 1b and 1c can be set to be thinner in the thickness dimension, whereby making it possible to realize thickness reduction of the component in comparison with thickness dimensions of components formed by conventional machining.

Moreover, the component manufacturing method according to the present embodiment makes it possible to create hollow portions in the predetermined areas of the component and appropriately select materials for the plate-like members, whereby weight reduction of the component can be planned while maintaining the strength of the component. Furthermore, because the upper surface board J is created by superimposing the plurality of the plate-like members, designability is enhanced to design each of the plate-like members, realizing designability on design surface or design diversity.

Note that the component manufacturing method according to the first embodiment allows integral arrangement of portions such as the plurality of bosses p1 serving as uniquely shaped local portions in the front plate-like member 1a and therefore, in comparison with conventional posterior work applying different members in arrangement of uniquely shaped local portions such as bosses and dwells, the number of members can be reduced.

In addition, the upper surface board J according to the present embodiment is made of a three-piece structure of laminating the plate-like members 1a, 1b and 1c and if an aluminum material is applied to one sheet or plural sheets of such a structure, superior heat dissipation performance can be realized. It is further possible to enhance adiabaticity by interposing a heat insulating sheet between each of the plate-like members 1a, 1b and 1c.

Furthermore, in the method for manufacturing the upper surface board J provided with the bosses p1 as shown in the first embodiment, the circular thin parts u1 are formed by crushing the metal sheet material u and the thickened parts u2 are created inside the thin parts u1 respectively, followed by burring the thickened parts u2 to form the cylindrical parts u3 and using plastic deformation of the thickened parts u2, each of which is present between the cylindrical part u3 and the thin part u1, for arrangement of the protrusions p11 having a cup-shape by drawing work so that the screw holes p12 are created by carving the screw grooves p13 in the inner circumference of the cylindrical parts u3 respectively. After applying burring work to form the cylindrical parts u3 which are high enough not to cause cracks in the intermediate plate-like member 1b, the presence of the thickened parts u2 is used to draw the outside of the cylindrical parts u3, whereby making it possible to allow, without imposing unnatural deformation on the intermediate plate-like member 1b, the entire height dimension of the boss p1 to be naturally larger than the protruded dimension s1 of the cylindrical part u3. That is, after applying burring work to form the cylindrical parts u3, the outside of the cylindrical parts u3 is subjected to drawing work and thus the drawing work allows formation of the cylindrical parts u3 at positions displaced from the intermediate plate-like member 1b in the thickness direction. Accordingly, the distance between the intermediate plate-like member 1b provided with the bosses p1 and the housing installed via the bosses p1 can be made larger naturally.

Also, owing to the thickened parts u2 created by crushing the metal sheet material U, deep drawing can be realized without causing cracks or other defects in the metal sheet material U.

In addition, the method for manufacturing the upper surface board J according to the present embodiment makes it possible to form, in comparison with manufacturing an upper surface board by currently practiced aluminum machining work, the bosses p1 which are taller by inexpensive press working, whereby various forms of components can be manufactured without causing a substantial increase of man-hour.

Moreover, the method for manufacturing the upper surface board J according to the present embodiment makes it possible to plan weight reduction and thickness reduction while maintaining the strength of the metal sheet material U. With no formation of unevenness in the front plate-like member 1a in response to the bosses p1, designability can also be enhanced on design surface. Furthermore, integration of the intermediate plate-like member 1b and the bosses p1 allows reduction in the number of components.

### <Second embodiment>

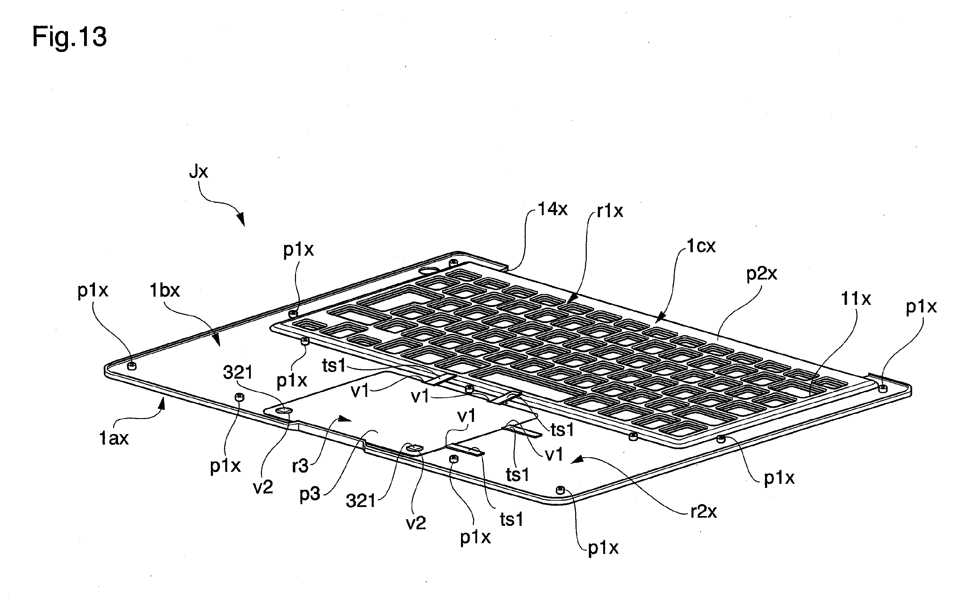

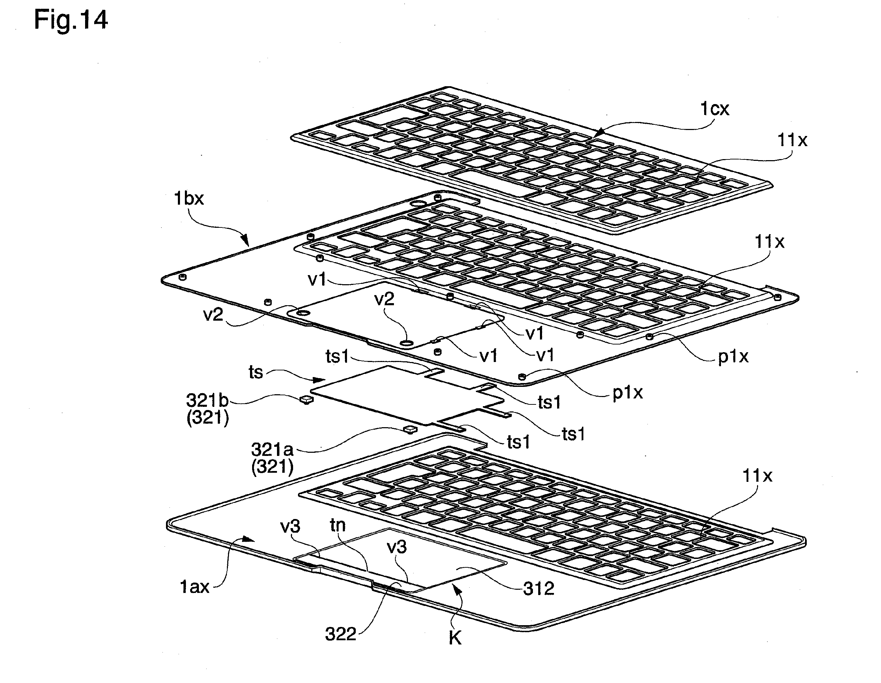

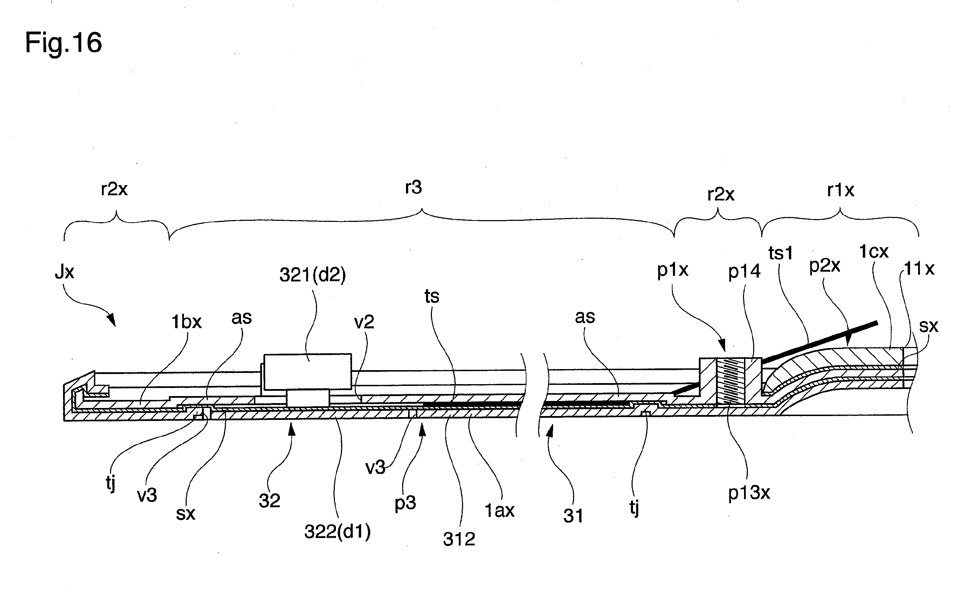

Subsequently a second embodiment of the present invention will be explained with reference to Fig.13 to Fig.16.

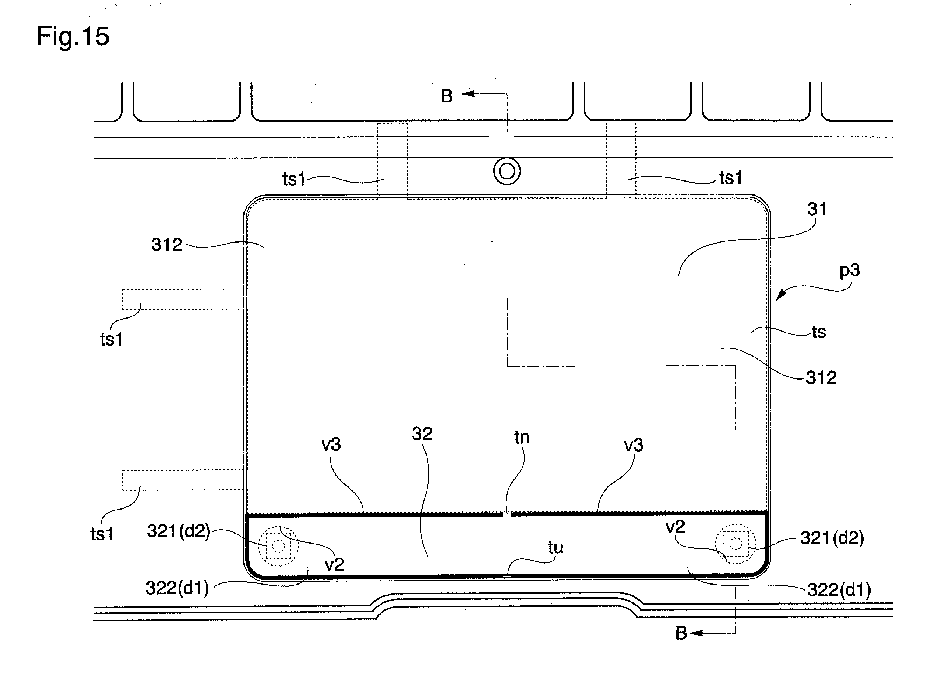

In the second embodiment, similar to the aforementioned first embodiment, the present invention is applied to an upper surface board Jx for formation of a keyboard of a notebook computer as a housing component of an electronic apparatus and, for convenience of explanation, Fig.13, Fig.14 and Fig.15 show an inner surface side directed upward. Fig.15 is a plan view observed from an outer surface.

The upper surface board Jx is realized by superimposing and joining, via adhesive layers sx, a plurality of differently shaped plate-like members each of which is created by single-piece press working, namely a front plate-like member 1ax which is exposed externally, an intermediate plate-like member 1bx which is spliced to a back side of the front plate-like member 1ax, and a rear plate-like member 1cx which is spliced to an backsurface side of the intermediate plate-like member 1c. Furthermore, between the front plate-like member 1ax and the intermediate plate-like member 1bx, a track pad sheet ts which is a special plate-like member is pressed and held. Each of the front plate-like members 1a, the intermediate plate-like member 1b and the rear plate-like member 1c is made of metal or more specifically uses iron, aluminum, copper, stainless, titanium and magnesium or other elements. The upper surface board Jx includes a plurality of bosses p1x which are uniquely shaped local portions, a thick part p2x which constitutes an area r1x for keyboard formation, and an operation part p3 which constitutes an area r3 for track and keyboard operation.

The upper surface board Jx thus comprises the area r1x for keyboard formation, the area r2x for frame plate formation by which the area r1x is surrounded, and the area r3 for track and switch operation. Then, the adhesive layers sx are present continuously with a substantially constant thickness over entire areas of joining surfaces of the plate-like members 1ax, 1bx and 1cx.

The bosses p1x, which are areas for installation and formed by the intermediate plate-like member 1bx, protrude to the inner side of the housing in such a state that the intermediate plate-like member 1bx is bonded to the front plate-like member 1ax. The bosses p1x are created by using flanges p14 for boss formation as a main constituent which are formed integrally with the intermediate plate-like member 1bx when the intermediate plate-like member 1bx is created by single-piece press working, wherein screw grooves p13x formed by tapping inner circumferences of the flanges p14 respectively, followed by bonding the intermediate plate-like member 1bx to the front plate-like member 1ax

The thick part p2x is provided to mainly change the strength and created by superimposing and bonding the intermediate plate-like member 1bx and the rear plate-like member 1cx to the back surface of the front plate-like member 1ax. The rear plate-like member 1cx is of a shape corresponding to the area r1x for keyboard formation and the intermediate plate-like member 1bx is of a shape combining the area r1x for keyboard formation and the area r2x for frame plate formation. Therefore, the area r1x for keyboard formation is composed of three of the front, intermediate and rear plate-like members 1ax, 1bx and 1cx, whereas the area r2x for frame plate formation is composed of two of the front and intermediate plate-like members 1ax and 1bx. As a result, the area r1x for keyboard formation is made larger than the area r2x for frame plate formation in the thickness dimension by a thickness of the rear plate-like member 1cx. Accordingly, the upper surface board Jx is provided with the plurality of the areas which are different to each other in the number of the superimposed plate-like members and the thickness.

The operation part p3 is provided to add special functions and arranged adjacent to a track pad 31 and a click button 32.

The track pad 31 comprises a track pad sheet ts for converting finger movement to an electric signal, and a track pad cover 312 for covering a top surface of the track pad sheet ts. The track pad sheet ts is a rectangular plate with a plurality of terminals ts1 connected to a substrate not shown and has a normal inner structure which is omitted to explain. In the intermediate plate-like member 1bx, slits v1 for terminal insertion are formed to guide the terminals ts1 to the substrate. The track pad cover 312 is a plate to cover entire areas of the top surface of the track pad sheet ts and structured integrally with the front plate-like member 1ax. As stated above, the track pad 31 has such a unique structure that the track pad sheet ts is sandwiched by two of the sheet metals (i.e. the track pad cover 312 integrated with the front plate-like member 1ax and the intermediate plate-like member 1bx) so as to prevent the track pad sheet ts from being exposed externally.

The click button 32 includes a pair of tact switches 321 for converting pressing operation into an electronic signal and a switch cover 322 for covering top surfaces of these tact switches 321 and transferring pressing operation to the tact switches 321. The tact switches 321 of a normal structure include terminals not shown which are arranged in lower ends thereof and connected to the substrate and, for example, one of them is set for left click use and the other for right click use. In the intermediate plate-like member 1bx, interference prevention holes v2 are arranged to prevent interference with the tact switches 321. The switch cover 322 is formed into a strip shape to cover a tact switch 321a for left click in one end and cover a tact switch 321b for right click in the other end and structured integrally with the front plate-like member 1ax. One end and the other end are partially separated from the front plate-like member 1ax via a cutoff slit v3 which is formed into a U shape to be seen in a plan view, wherein one end and the other end are elastically deformable like a cantilever in the thickness direction by using, as a fulcrum, a joint tn arranged in the middle. Therefore, operation to press one end of the switch cover 322 causes downward elastic displacement of the one end to trigger changeover of the tact switch 321a for left click, while operation to press the other end of the switch cover 322 causes downward elastic displacement of the other end to trigger changeover of the tact switch 321b for right click. The click button 32 has a unique structure in which the switches are switched by using elastic deformation of a part of the housing of the electronic apparatus as stated above. That is, the click button 32 includes an elastically displaced part d1 which is formed integrally with a part of the metallic housing and switches d2 which are installed inside the elastically displaced part d1 and switched in response to displacement of the elastically displaced part d1 caused by external operation. In this embodiment, the switch cover 322 which is formed integrally with the front plate-like member 1ax corresponds to the elastically displaced part d1 and the tact switches 321 correspond to the switches d2.

As stated above, the track pad cover 312 of the track pad 31 and the switch cover 322 of the click button 32 are formed integrally with the front plate-like member 1ax when the plate-like member 1ax is manufactured by singe-piece press working. A protruded ridge tj which protrudes to the inner surface side is formed integrally with an area by which the track pad cover 312 and the switch cover 322 and the track pad sheet ts are surrounded in the front plate-like member 1ax and the track pad sheet ts is arranged inside the protruded ridge tj. The intermediate plat-like member 1bs also includes a shallow-drawing part which is formed to secure a space for accommodating the track pad sheet ts.

The area r1x for keyboard formation includes a multiple number of plural key accommodating holes 11x arranged to accommodate keys not shown. The area r2x for frame plate formation also includes notches 14x formed to correspond to hinges not shown and the bosses p1x are arranged in this area. The area r3 for track and switch operation includes the track pad 31 and the click button 32 which are created by using a local member formed simultaneously when the plate-like members 1x are produced by single-piece press working. That is, in this embodiment, a local member K which is formed simultaneously when the front plate-like member 1ax is subjected to single-piece press working is used to create the track pad cover 312 of the track pad 31 and the switch cover 322 of the click button 32.

The upper surface board Jx as explained above can be manufactured by a manufacturing method according to the aforementioned first embodiment. Main differences between the present embodiment and the first embodiment are in the formation of the bosses p1x only by burring work and the intervention of the track pad sheet ts between the front plate-like member 1ax and the intermediate plate-like member 1bx, while other differences in shape can be accommodated by different metal molds for press working.

As stated above, the component manufacturing method according to the second embodiment makes it possible to obtain not only advantageous effects similar to those of the aforementioned component manufacturing method according to the first embodiment but also the component which is integrally formed by bonding press working with the track pad sheet ts interposed between the front plate-like member 1ax and the intermediate plate-like member 1bx, whereby the number of components can be reduced with reduction of assembling man-hour.

Note that the preset invention is not limited to each of the embodiments as explained above.

Although explanation was made in the first and second embodiments for application of the present invention to the upper surface boards which constitute the notebook computer housings, the present invention is not limited to these embodiments and applicable to components for various kinds of products.

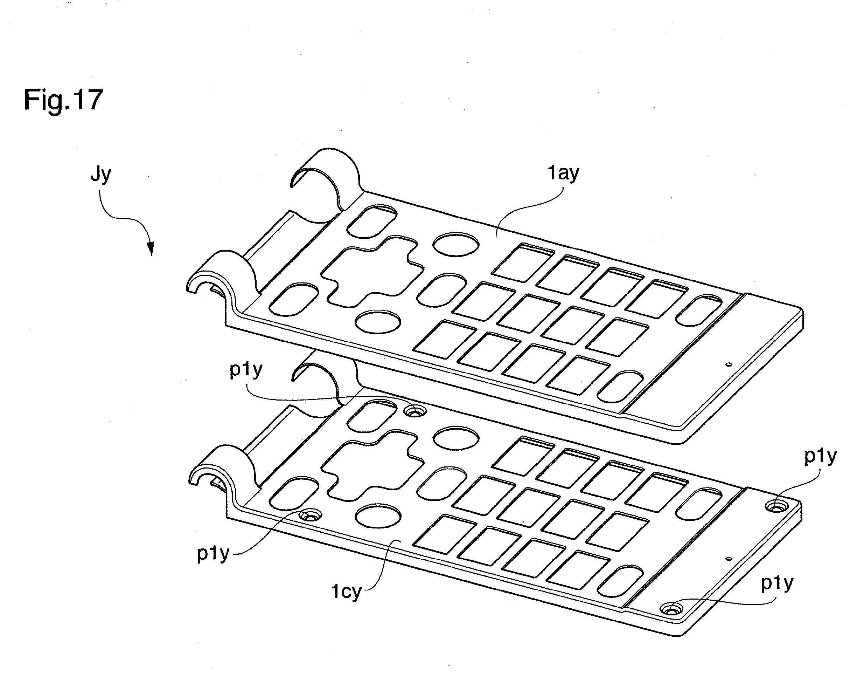

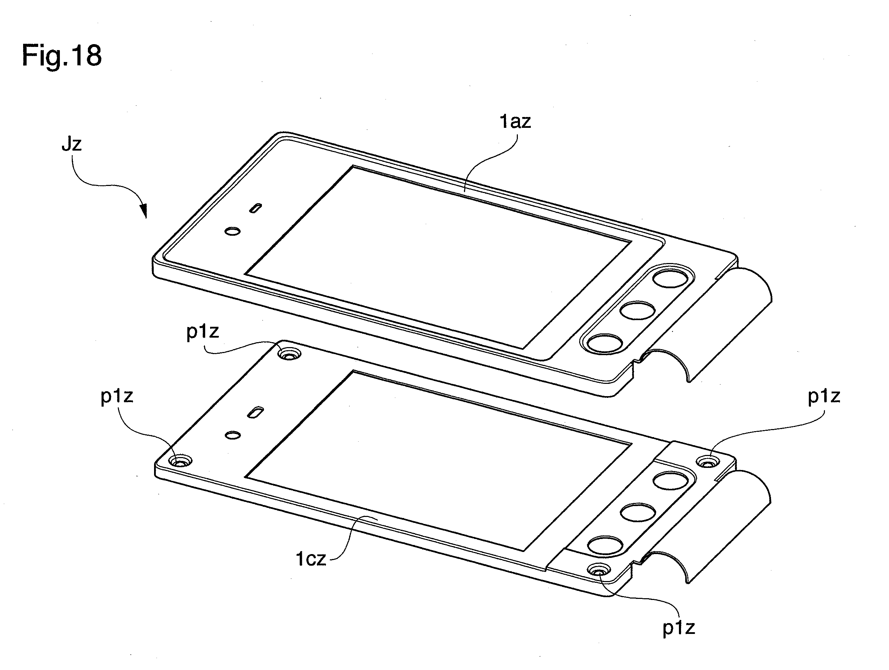

Fig.17 and Fig.18 show another embodiment in which the present embodiment is applied to an operation-side upper surface board Jy and a display-side upper surface board Jz which constitute a housing of a mobile phone. The operation-side upper surface board Jy is formed, as shown in Fig.17, by joining a front plate-like member 1ay and a rear plate-like member 1cy by bonding press working wherein a plurality of bosses p1y, which are uniquely shaped local portions, is formed by protrusions which are formed integrally with the rear plate-like member 1cy. These bosses p1y are structured similarly to the bosses p1 of the first embodiment and manufactured by a technique similar to the aforementioned one. Note that the front plate-like member lay is created by applying single-piece press working to a so-called color steel plate. The display-side upper surface board Jz is formed, as shown in Fig.18, by joining a front plate-like member 1az and a rear plate-like member 1cz by bonding press working wherein a plurality of bosses p1z, which are uniquely shaped local portions, is formed by protrusions which are formed integrally with the rear plate-like member 1cz. These bosses p1z are structured similarly to the bosses p1 of the first embodiment and manufactured by a technique similar to the aforementioned one.

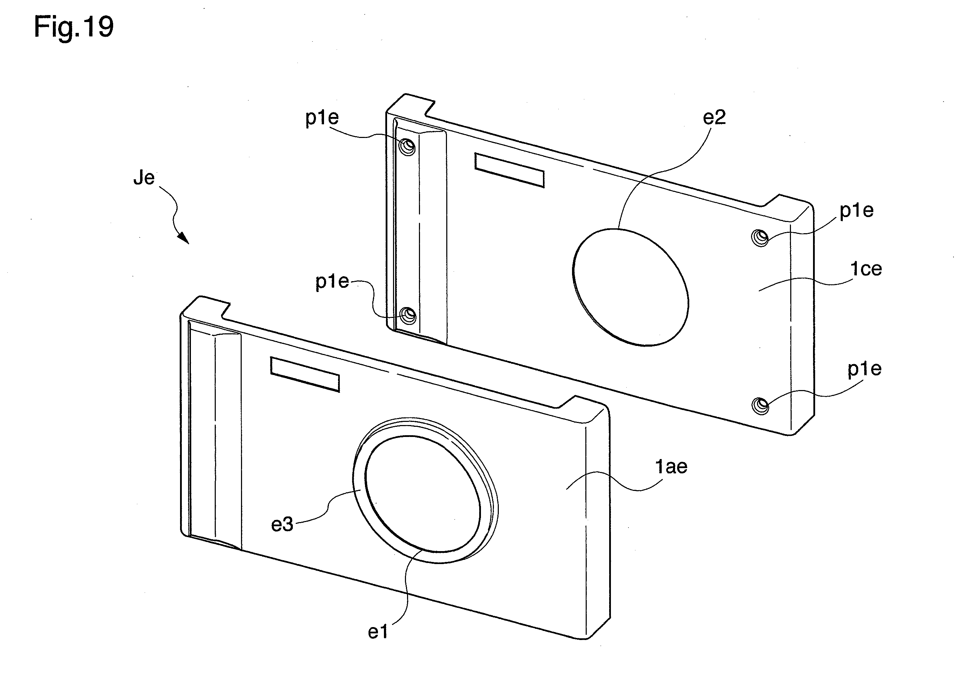

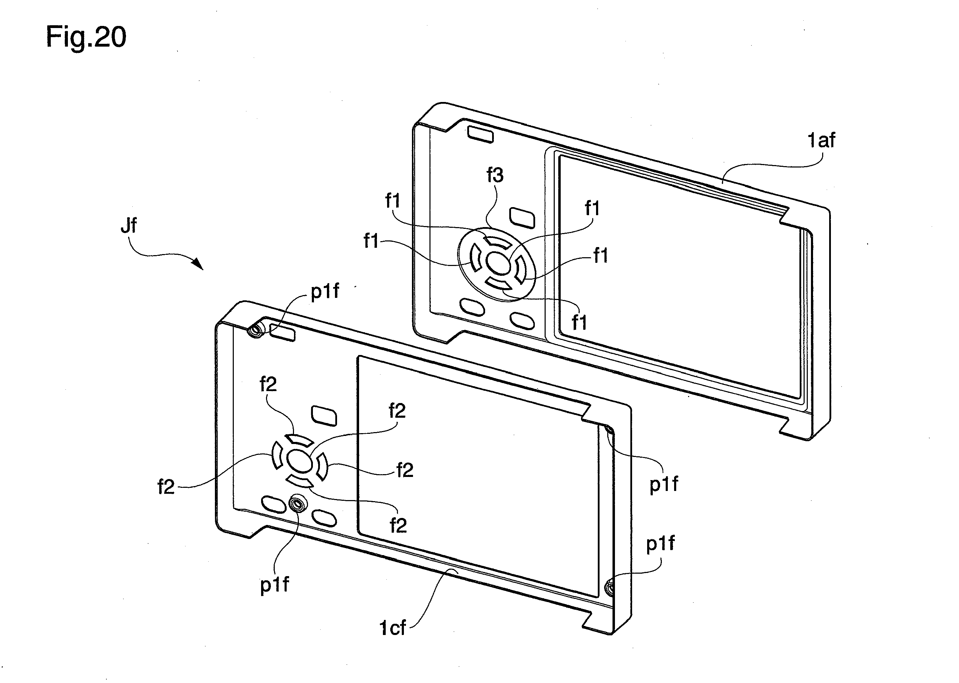

Fig.19 and Fig.20 show yet another embodiment in which the present invention is applied to a front surface board Je and a rear surface board Jf to constitute a housing of a digital camera. The front surface board Je is formed, as shown in Fig.19, by joining a front plate-like member 1ae and a rear plate-like member 1ce by bonding press working, wherein a plurality of bosses p1e, which are uniquely shaped local portions, is formed by protrusions which are formed integrally with the rear plate-like member 1ce. At a substantial center of the front and rear plate-like members 1ae and 1ce, through holes e1 and e2 which are uniquely shaped local portions are formed respectively to expose a cylindrical lens member not shown. Then, the front plate-like member 1ae includes a lens member peripheral edge e3, which is a uniquely shaped local portion, formed by causing a peripheral edge of the through hole e1 to protrude externally. The plurality of the bosses p1e is structured similarly to the aforementioned bosses p1 of the first embodiment and manufactured by a technique similar to the aforementioned one. Note that the front plate-like member 1ae is created by applying single-piece press working to a so-called color steel plate. The rear surface board Jf is formed, as shown in Fig.20, by joining a front plate-like member 1af and a rear plate-like member 1cf by bonding press working wherein a plurality of bosses p1f, which are uniquely shaped local portions, is formed by protrusions which are formed integrally with the rear plate-like member 1cf. The front and rear plate-like members 1af and 1cf also include formations of a plurality of openings f1 and f2 for operation button exposure which are uniquely shaped local portions. The front plate-like member 1af is provided with a design formation part f3 which is a uniquely shaped local portion created by applying shallow drawing work to cause external protrusion of the vicinity of the openings f1. The plurality of the bosses p1f is structured similarly to the bosses p1 of the first embodiment and manufactured by a technique similar to the aforementioned.

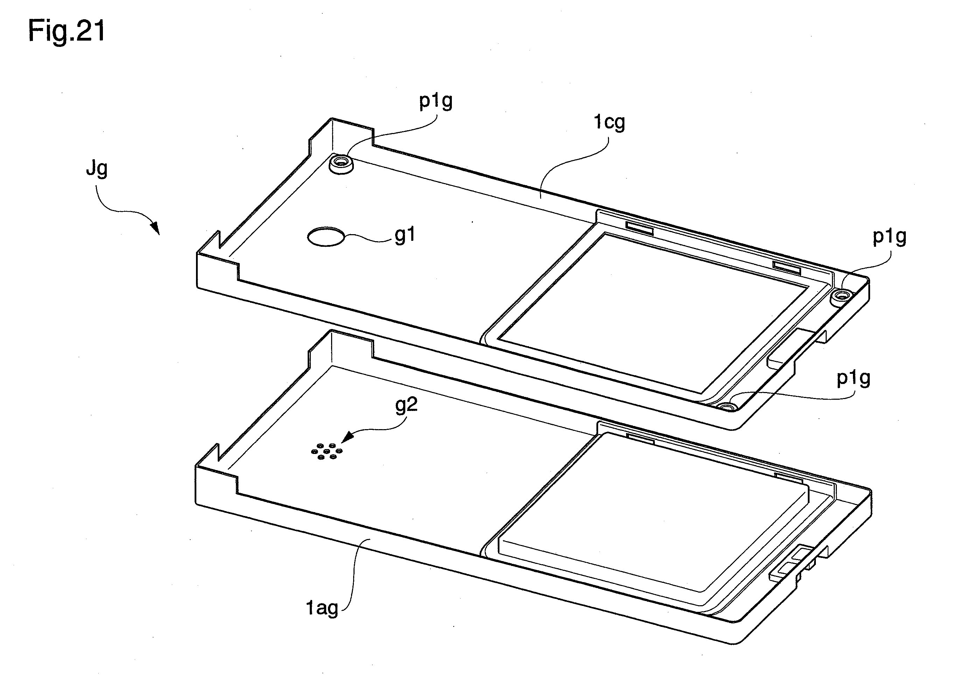

Fig.21 shows a further embodiment in which the present invention is applied to a rear surface board Jg which constitutes a housing of a rectangular mobile phone. The rear surface board Jg is provided in such a manner that a front plate-like member 1ag and a rear plate-like member 1cg are joined by bonding press working and a plurality of bosses p1g, which are uniquely shaped local portions, is formed by protrusions which are formed integrally with the rear plate-like members 1cg, while a round hole g1, which is a uniquely shaped local portion, is formed on the left side of Fig.21 to allow sound to pass therethrough from a speaker not shown. Meanwhile, the front plate-like member 1ag includes a plurality of openings g2 being uniquely shaped local portions which are constituted by relatively small plural holes, arranged at a position corresponding to the round hole g1 so as to allow sound to pass therethrough and adjust the appearance. The bosses p1g are structured similarly to the bosses p1 of the first embodiment and manufactured by a technique similar to the aforementioned one.

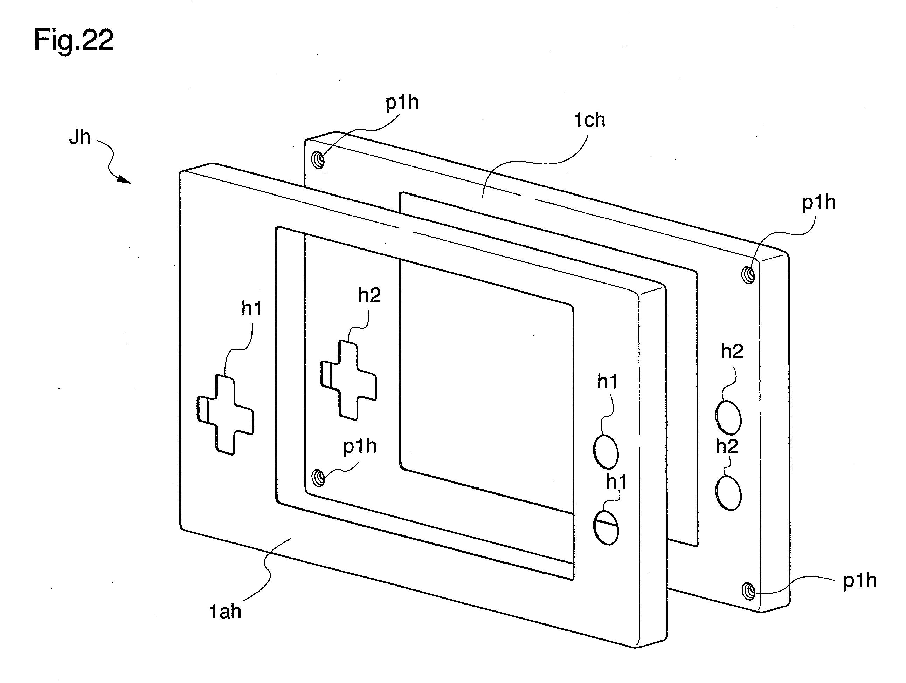

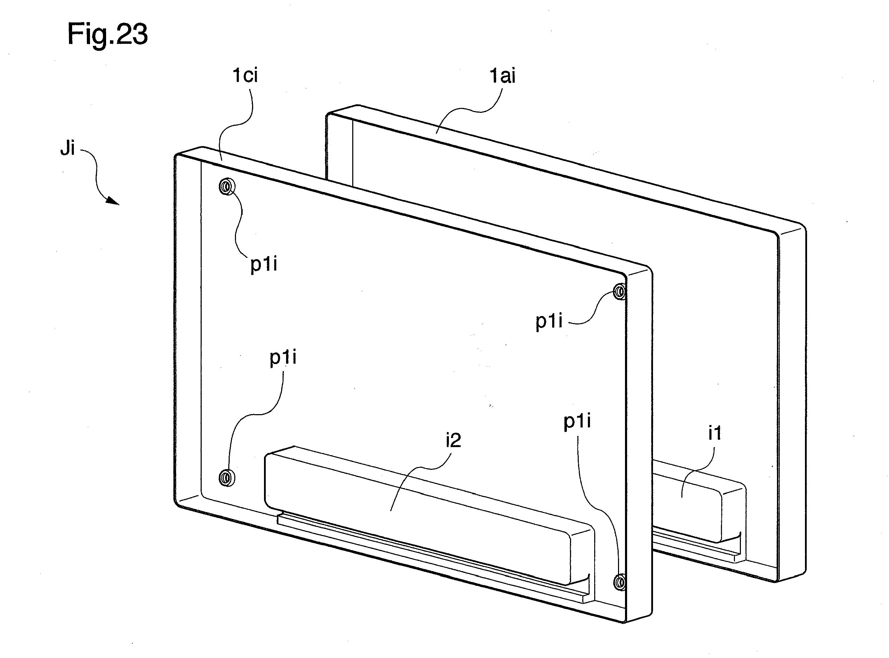

Fig.22 and Fig.23 show another embodiment in which the present invention is applied to a front surface board Jh and a rear surface board Ji which constitute a housing of a mobile game machine. The front surface board Jh is formed, as shown in Fig.22, by joining a front plate-like member 1ah and a rear plate-like member 1ch by bonding press working wherein a plurality of bosses p1h, which are uniquely shaped local portions, is formed by protrusions which are formed integrally with the rear plate-like member 1ah. The front and rear plate-like members 1ah and 1ch also include opening windows h1 and h2 formed into appropriate shapes to expose controller buttons not shown. Note that the bosses p1h are structured similarly to the aforementioned bosses of the first embodiment and manufactured by a technique similar to the aforementioned one. The front plate-like member 1ah is created by applying single-piece press working to a so-called color steel plate. The rear surface board Ji is formed, as shown in Fig.23, by joining a front plate-like member 1ai and a rear plate-like member 1ci by bonding press working wherein a plurality of bosses pli, which are uniquely shaped local portions, is formed by protrusions which are formed integrally with the rear plate-like member 1ci. The front and rear plate-like members 1ai and 1ci also include accommodating parts i1 and i2 which are uniquely shaped local portions recessed from the outside to the inside to accommodate mainly a battery, respectively. The bosses pli are structured similarly to the aforementioned bosses p1 of the first embodiment and manufactured by a technique similar to the aforementioned one.

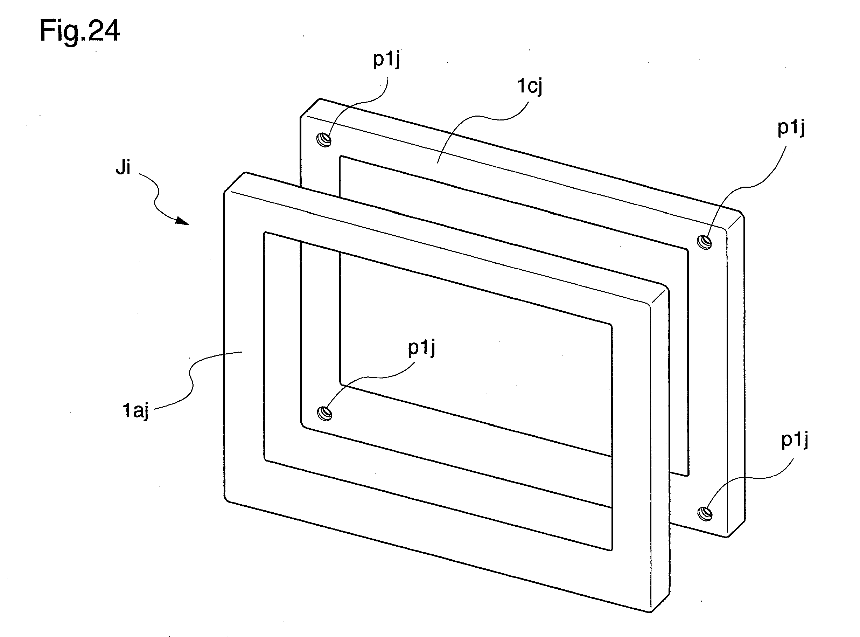

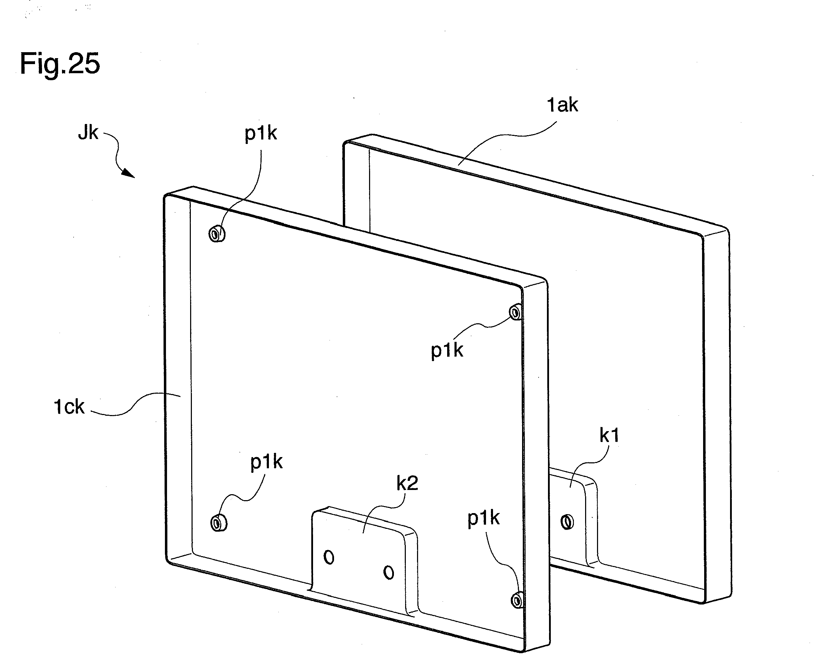

Fig.24 and Fig.25 show another embodiment in which the present invention is applied to a front surface board Jj and a rear surface board Jk which constitute a housing of a mobile car navigation. The front surface board Jj is formed, as shown in Fig. 24, by joining a front plate-like member 1aj and a rear plate-like member 1cj by bonding press working wherein a plurality of bosses plj, which are uniquely shaped local portions, is formed by protrusions which are formed integrally with the rear plate-like member 1cj. These bosses p1h are structured similarly to the aforementioned bosses p1 of the first embodiment and manufactured by a technique similar to the aforementioned one. Note that the front plate-like member 1aj is created by applying single-piece press working to a so-called color steel plate. The rear surface board Jk is formed, as shown in Fig.24, by joining a front plate-like member 1ak and a rear plate-like member 1ck by bonding press working wherein a plurality of bosses p1k, which are uniquely shaped local portions, is formed by protrusions which are formed integrally with the rear plate-like member 1ck. The front and rear plate-like members 1ak and 1ck also include mounting member engaging areas k1 and k2 which are uniquely shaped local portions recessed from the outside to the inside so as to install a mounting member for being mainly fixed to cars or other vehicles. The bosses p1k are structured similarly to the aforementioned bosses p1 of the first embodiment and manufactured by a technique similar to the aforementioned one.

Other components which partially constitute housings of electronic apparatuses according to the present invention include, in addition to those explained above, various kinds of components for desktop personal computer, smartphone and personal digital assistant (PDA) or other devices. The components according to the present invention are not limited to those for electronic apparatuses but applicable to those for car and aircraft.

Although the aforementioned embodiments were explained in concrete terms in the case that the uniquely shaped local portions mainly correspond to the bosses serving as a portion for installation, the thick parts serving as a portion for changing the strength and the operation parts serving as a portion for adding unique functions, the present invention is not limited to them. Other portions for installation include a hook for engaging with various kinds of members and a hole formed to insert another member therethrough. Portions for changing the strength include a rib formed into a reinforcement shape and a thin part formed to be thinner than any other portions. Portions for adding unique functions include a rail for connecting superimposed members to each other slidably and movably.

Other uniquely shaped local portions include a portion formed into a protruded shape for positioning dowels and other elements, a hole and a cavity for contributing to weight reduction, a thick part formed to be thicker than any other portions for weight increase, a portion for changing the mass distribution such as a thin part formed to be thinner than any other portions for weight reduction and/or a design formation portion for appearance adjustment such as a rugged part formed to change the appearance.

Although the aforementioned embodiments were explained in the case that each of the plurality of the plate-like members is made of metal by single-piece press working, at least one of the plate-like members may also be non-metallic. Examples of the non-metallic member include, for example, members made of resin, glass, wood, ceramics, mortar, concrete and so on.

For the adhesive layers arranged between the plate-like members, in addition to those arranged in advance on one surfaces of the plate-like members as shown in the aforementioned embodiments, a separate independent sheet adhesive and a liquid adhesive may also be used. However, if a resin coat serving as the adhesive layers as shown in the aforementioned embodiments is provided in advance for the plate-like members, it will contribute to reduction of man-hours in bonding press working.

Although the aforementioned embodiments were explained in the case that at least one of the plate-like members includes an element to mainly change strength characteristics and serves as an element to form a design surface for appearance adjustment, no limitation is imposed on these elements. For example, at least one of the plate-like members may also include an element to change the mass distribution, an element having a shielding function for shielding heat, electricity, electromagnetic wave, sound and light or the like and an element having a vibration damping function or other elements.

Although detailed explanation was made in the aforementioned embodiments for bonding press working which evokes at least an adhesive function of the adhesive layers interposed between the plate-like members, reinforced joining work may also be applied in addition to the bonding press working. The reinforced joining work refers to, for example, laser welding work for joining adjacent metallic plate-like members to each other by irradiating a laser beam to a boundary therebetween, spot welding work for joining metallic plate-like members, which are unexposed externally, to each other by spot welding and fastening work for joining externally unexposed plate-like members to each other by using a rivet or other work.

Although the above embodiments show the form of cutting off, in finishing press working, unnecessary portions after completion of bonding press working or more specifically the form of cutting off metallic portions and adhesive layer portions which swell out of portions to constitute the edges of the finished products, no limitation is imposed on the unnecessary portions. Other unnecessary portions include a positioning portion for positioning a plurality of superimposed plate-like members to each other.

The present invention is not limited to the components in the aforementioned embodiments comprising the plurality of the areas which are different to each other in the number of the superimposed plate-like members and the thickness and may contain the areas which are different to each other in the number of the superimposed plate-like members and share the same thickness in entire areas.

The bosses are not limited to a circular shape and may be adapted to any other shapes such as ellipse. In addition, the number of the bosses is not limited to the plural and one boss may be used.

The thin part is not limited to a complete circular formation and may also be intermittent.

If a product provided with a boss is made of a single member, the boss is preferably formed integrally with the single member. The single member in this case may be any members as long as being recognizable as one object by appearances and plastically deformable, including, for example, not only a member obtained by forming a metallic material such as single metal and alloy into a certain shape but also a member obtained by laminating and/or mixing a plurality of metallic materials such as cladding and plating and forming it into a certain shape and/or a member obtained by mixing a metallic material and a non-metallic material and forming it into a certain shape. In contrast, if a product provided with a boss is composed of a plurality of members as shown in the first embodiment, the boss should be formed integrally with at least a part of the members. The plurality of the members in this case may be any members as long as being recognizable as a plurality of objects by appearances and including at least a plastically deformable member by which the boss is formed. Members with no formation of the boss include members made of any materials irrespective of whether or not plastic deformation is possible.

If a different material is used for each of plate-like members to be superimposed, components can be manufactured with various kinds of variations by utilizing characteristics of materials to be employed or more precisely characteristics of metal employed as a plate-like member and characteristics of the presence and absence of coloring or other characteristics. For example, various forms are suggested by employing a color steel plate (or iron) with any colors and patterns applied to a top surface for a externally exposed plate-like member while employing an aluminum steel plate and a stainless steel plate (or stainless steel) different from the externally exposed plate-like member for another plate-like member which is unexposed externally, employing a stainless steel plate (or stainless plate) with any colors or patterns applied to a top surface for an externally exposed plate-like member while employing an aluminum steel plate different from the externally exposed plate-like member for another plate-like member which is unexposed externally, and employing a color aluminum steel plate with any colors and patterns applied to a top surface for an externally exposed plate-like member while employing another aluminum steel plate different from the color aluminum steel for another plate-like member which is unexposed externally, or employing other materials. If a front plate-like member using a color steel plate, a color stainless steel plate and a color aluminum steel plate is employed, a coating step in a component manufacturing process can be eliminated or simplified. Moreover, in such a case, a component can be manufactured by selecting a plate-like member with already applied colors and/or patterns and followed by pressing and therefore, in comparison with a step in which coating is applied by selecting any colors after manufacturing a component, it is relatively easy to obtain components with various kinds of variations such as different colors and patterns. Furthermore, if a steel metal with relatively superior strength is employed for an outer plate-like member, the member becomes preferably proof against strong shock received from the outside. Meanwhile, if an aluminum steel plate is used for a rear plate-like member and an intermediate plate-like member which are externally unexposed plate-like members, excellent weight reduction and formability can be realized with improved heat dissipation effect.

Other various modifications may also be added in a range without damaging the purport of the present invention.

### [Industrial Applicability]

If the component manufacturing method according to the present invention is employed, a component with uniquely shaped local portions can be obtained by superimposing a metallic plate-like member created by single-piece press working to another plate-like member processed separately into a different shape and joining these plural plate-like members according to bonding press working. Therefore, various forms of components can be manufactured with uniquely shaped local portions while enabling enhancement of designability without causing a substantial increase of man-hours. Employing the components according to the present invention also makes it possible to reduce man-hour in manufacturing a component with uniquely shaped local portions because each of plate-like members is created by single-piece press working.

### [Description of Reference Numerals]

- 1a ---: Plate-like member (Front plate-like member)
- 1b ---: Plate-like member (Intermediate plate-like member)
- 1c ---: Plate-like member (Rear plate-like member)
- P1 ---: Boss (Uniquely shaped local portion)
- J1 ---: Component (Upper surface board)
- s ---: Adhesive layer

## Claims

1. A component manufacturing method **characterized in that** a metallic plate-like member created by single-piece press working is superimposed to another plate-like member processed separately into a different shape and these plural plate-like members are joined according to bonding press working so as to obtain a component with uniquely shaped local portions formed by at least one of said plate-like members.

2. The component manufacturing method according to claim 1, wherein said bonding press working is to join said plural plate-like members by a pressing machine provided with a stroke control function.

3. The component manufacturing method according to claim 1 or 2, wherein said bonding press working is to evoke at least an adhesive function of an adhesive layer interposed between said plate-like members.

4. The component manufacturing method according to any of claims 1 to 3, wherein said bonding press working is to evoke at least an adhesive function of an adhesive layer interposed between said plate-like members and reinforced joining work is applied in addition to said bonding press working.

5. The component manufacturing method according to claim 4, wherein said reinforced joining work is laser welding work to join adjacent metallic plate-like members to each other by irradiating a laser beam to a boundary therebetween.

6. The component manufacturing method according to claim 4, wherein said reinforced joining work is spot welding work to join externally unexposed metallic plate-like members to each other by spot welding.

7. The component manufacturing method according to claim 4, wherein said reinforced joining work is fastening work to join externally unexposed plate-like members to each other by using rivets.

8. The component manufacturing method according to any of claims 1 to 7, wherein said uniquely shaped local portions are portions for installation.

9. The component manufacturing method according to any of claims 1 to 8, wherein said uniquely shaped local portions are portions for positioning.

10. The component manufacturing method according to any of claims 1 to 9, wherein said uniquely shaped local portions are portions for changing the strength.

11. The component manufacturing method according to any of claims 1 to 10, wherein said uniquely shaped local portions are portions for changing the mass distribution.

12. The component manufacturing method according to any of claims 1 to 11, wherein said uniquely shaped local portions are portions for adding unique functions.

13. The component manufacturing method according to any of claims 1 to 12, wherein said uniquely shaped local portions are design formation portions for appearance adjustment.

14. The component manufacturing method according to any of claims 1 to 13, wherein said plate-like members are entirely made of metal each created by single-piece press working.

15. The component manufacturing method according to any of claims 1 to 13, wherein at least one of said plate-like members is non-metallic.

16. The component manufacturing method according to any of claims 1 to 15, wherein at least one of said plate-like members includes an element to change strength characteristics.

17. The component manufacturing method according to any of claims 1 to 16, wherein at least one of said plate-like members includes an element to change the mass distribution.

18. The component manufacturing method according to any of claims 1 to 17, wherein at least one of said plate-like members includes an element having a shielding function for shielding heat, electricity, electromagnetic wave, sound and light.

19. The component manufacturing method according to any of claims 1 to 18, wherein at least one of said plate-like members includes an element having a vibration damping function or the like.

20. The component manufacturing method according to any of claims 1 to 19, wherein at least one of said plate-like members includes an element to form a design surface for appearance adjustment.

21. The component manufacturing method according to any of claims 1 to 20, wherein said plate-like members are provided with adhesive layers formed in advance at least on one surface thereof.

22. The component manufacturing method according to any of claims 1 to 21, further comprising finishing press working to cut off unnecessary portions after completion of said bonding press working.

23. The component manufacturing method according to claim 22, wherein said unnecessary portions are portions swelling out of portions to constitute an edge of a finished product.

24. The component manufacturing method according to claim 23, wherein said unnecessary portions are positioning portions for positioning said plate-like members to each other.

25. The component manufacturing method according to any of claims 1 to 24, wherein said component partially constitutes a housing of an electronic apparatus.

26. The component manufacturing method according to claim 25, wherein said electronic apparatus is a notebook computer.

27. A component **characterized in that** a plurality of plate-like members of different shapes, each created by single-piece press working, is superimposed and joined via an adhesive layer and uniquely shaped local portions formed by at least one of said plate-like members are included, said adhesive layer being present continuously with a substantially constant thickness over entire areas of joining surfaces of said plate-like members.

28. The component according to claim 27, comprising a plurality of areas being different to each other in the number of said plate-like members superimposed.

29. The component according to claim 28, wherein at least two of said areas are different to each other in the thickness.

30. The component according to claims 27 to 29, wherein said plural plate-like members include a front plate-like member exposed externally, an intermediate plate-like member spliced to a back side of said front plate-like member, and a rear plate-like member spliced to an back surface side of said intermediate plate-like member, said uniquely shaped local portions being formed by said intermediate plate-like member.

31. The component according to claim 30, wherein said uniquely shaped local portions are bosses for installation with screw holes.
